# EUROPEAN PATENT APPLICATION

(11) **EP 4 835 327 A1**
(43) Date of publication of application: **04.11.2026**
(21) Application number: 24911617.9
(22) Date of filing: 30.12.2024
(51) Int. Cl.: F16H 57/08, F03D 15/00

(54) **DRIVETRAIN AND WIND TURBINE GENERATOR SYSTEM**

(30) Priority: 29.12.2023 CN 202311870715
(71) Applicant: GOLDWIND SCIENCE & TECHNOLOGY CO., LTD., Xinjiang 830026 (CN)
(72) Inventor: CHU, Jiankun, Beijing 100176 (CN); CHU, Xiaochao, Beijing 100176 (CN); WANG, Zhongzhong, Beijing 100176 (CN)
(74) Representative: Hoffmann Eitle
(86) International application number: PCT/CN2024/143745
(87) International publication number: WO 2025/140704

(57) **Abstract**

A drivetrain (10), comprising: a bearing housing (110); and a main shaft (120) that is rotatably supported in the bearing housing and has a front end and a rear end opposite to each other; a gearbox (200), comprising a box body (220) and a planet carrier (210) arranged in the box body, wherein the box body is fixedly connected to the rear end of the bearing housing, and the planet carrier is rigidly connected to the rear end of the main shaft; and a thrust bearing (230) arranged in the gearbox. The overall structure of the drivetrain is compact, and the shaft system and the gearbox are highly integrated; thus, the drivetrain has the advantages of light weight and low overall cost. The present disclosure further relates to a wind turbine generator system comprising the drivetrain.

## Description

This application claims priority to Chinese Patent Application No. 202311870715.8, filed with the China National Intellectual Property Administration on December 29, 2023, entitled "Drivetrain and Wind Turbine Generator System", the entire content of which is incorporated herein by reference.

### TECHNICAL FIELD

The present disclosure relates to the technical field of wind turbine generators and, in particular, to a drivetrain for a wind turbine and a wind turbine having the same.

### BACKGROUND

A wind turbine uses a large rotor to capture wind energy and drive a generator to generate electricity, thereby achieving wind power generation. The rotor transmits power to the generator via a drivetrain. Since the rotational speed of the rotor under wind action is relatively low and far below the speed required for power generation by the generator, the drivetrain includes, in addition to a main shaft system, a gearbox connected to the rear end of the main shaft. By utilizing the gearbox for speed variation, the relatively low rotational speed on the rotor side is increased to a sufficiently high rotational speed to drive the generator to produce electricity.

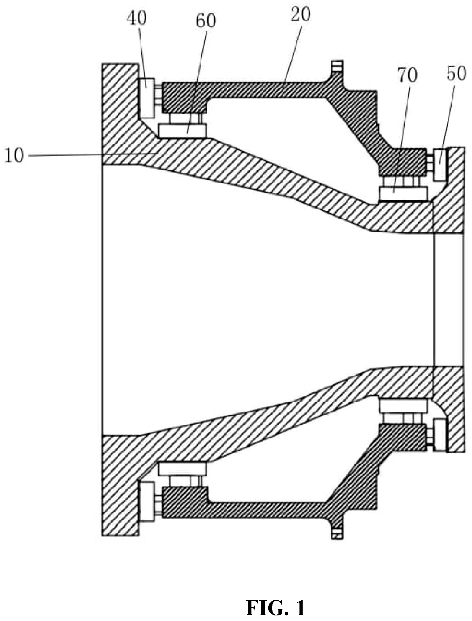

A conventional main shaft system comprises a bearing housing, a main shaft, and rolling bearings arranged between the main shaft and the bearing housing. However, as the installed capacity of wind turbines increases, their sizes are also becoming larger. With the increasing size of the wind turbines, the rolling bearings face challenges such as manufacturing difficulty, high material requirement, and installation difficulty, leading to increased costs of the shaft system using the rolling bearings. At present, sliding bearing shaft systems are gradually becoming a new technical solution for the main drivetrain of wind turbines. FIG. 1 is a schematic structural view of a shaft system using sliding bearings in the prior art.

As shown in FIG. 1, a radial bearing and a thrust bearing are arranged at each of the front end and the rear end of a main shaft 10. A secondary thrust bearing 40 and a front radial bearing 60 are arranged at the front end of the main shaft 10, and a primary thrust bearing 50 and a rear radial bearing 70 are arranged at the rear end of the main shaft 10. This structural design requires the radial bearings to have a relatively large diameter, particularly for the front radial bearing, which requires an even larger diameter, and the bearing housing 20 must be of one-piece construction. This solution has disadvantages such as high cost and difficulty in bearing installation and maintenance.

### SUMMARY

An object of the present disclosure is to provide a drivetrain and a wind turbine, which can solve the problems of the conventional sliding bearing drivetrain, including large size, and difficulty in installation and maintenance.

According to one aspect of the present disclosure, a drivetrain is provided, including: a bearing housing; a main shaft rotatably disposed and supported in the bearing housing and having a front end and a rear end opposite to each other; a gearbox including a housing and a planet carrier arranged in the housing, the housing being fixedly connected to the rear end of the bearing housing, and the planet carrier being rigidly connected to the rear end of the main shaft; and a thrust bearing arranged in the gearbox.

According to one aspect of the present disclosure, the gearbox includes at least one stage of planetary gear train, and the planet carrier is a first-stage planet carrier arranged in the gearbox. The thrust bearing is a sliding bearing arranged between an axial end of the planet carrier and the housing.

According to one aspect of the present disclosure, the thrust bearing is mounted on the housing and forms a friction pair with an axial end face of the planet carrier; or the thrust bearing is mounted on an axial end face of the planet carrier and forms a friction pair with the housing.

According to one aspect of the present disclosure, the housing includes a front housing, a middle housing, and a ring gear connected between the front housing and the middle housing. The thrust bearing includes a primary thrust bearing and a secondary thrust bearing. The primary thrust bearing is arranged between the axial rear end of the planet carrier and the middle housing. The secondary thrust bearing is arranged between the axial front end of the planet carrier and the rear end of the bearing housing; or the secondary thrust bearing is arranged between the axial front end of the planet carrier and a supporting flange of the front housing.

According to one aspect of the present disclosure, the drivetrain further includes a plurality of planet gears mounted on the planet carrier. The plurality of planet gears are arranged at intervals in a circumferential direction of the planet carrier, and the primary thrust bearing is mounted on the axial rear end face of the planet carrier between two adjacent planet gears.

According to one aspect of the present disclosure, the planet carrier is configured as an annular cylinder, and the axial length of the annular cylinder is greater than the axial length of the planet gears. A plurality of planet gear mounting grooves are formed in the annular cylinder, and the plurality of planet gears are respectively mounted in the planet gear mounting grooves. An annular flat surface is formed at each of the two axial ends of the annular cylinder.

According to one aspect of the present disclosure, the bearing housing includes a front bearing housing and a rear bearing housing which are separately formed. The drivetrain further includes a front radial bearing and a rear radial bearing. The front radial bearing is arranged between the front bearing housing and the main shaft, and the rear radial bearing is arranged between the rear bearing housing and the main shaft.

According to one aspect of the present disclosure, the secondary thrust bearing is arranged between a rear end face of the rear bearing housing and a front end face of the planet carrier.

According to one aspect of the present disclosure, the bearing housing and the front housing are integrally formed; or the bearing housing and the front housing are separately formed and connected to each other by fasteners.

According to one aspect of the present disclosure, the radial bearing includes a front radial bearing and a rear radial bearing. The front radial bearing is arranged between the bearing housing and an outer circumference of the front end of the main shaft. The rear radial bearing is mounted on a radially outer surface of the planet carrier and forms a friction pair with a radially inner surface of the housing; or the rear radial bearing is mounted on a radially inner surface of the housing and forms a friction pair with a radially outer surface of the planet carrier.

According to one aspect of the present disclosure, the main shaft and the planet carrier are integrally formed; or the main shaft and the planet carrier are separately formed and connected to each other by fasteners.

According to one aspect of the present disclosure, the radial bearing is mounted on the main shaft and forms a friction pair with the bearing housing; or the radial bearing is mounted on the bearing housing and forms a friction pair with the main shaft.

According to one aspect of the present disclosure, each of the radial bearing and the thrust bearing includes one of a tapered bearing pad and a spherical bearing pad.

According to one aspect of the present disclosure, the drivetrain is configured to be installed between a rotor and a generator of the wind turbine.

According to another aspect of the present disclosure, a wind turbine is provided, including the drivetrain as described above.

According to the embodiments of the present disclosure, the wind turbine main shaft system including a sliding bearing can have a split bearing housing design, facilitating convenient maintenance of the wind turbine, and reducing the weight and cost of the drivetrain.

### BRIEF DESCRIPTION OF THE DRAWINGS

The above and other objects and features of the present disclosure will become more apparent from the following description with reference to accompanying drawings, which illustrate exemplary embodiments, in which:
FIG. 1 is a schematic structural view of a shaft system in the prior art;
FIG. 2 is a schematic structural view of a drivetrain according to an embodiment of the present disclosure;
FIG. 3 is a schematic view showing installation of a primary thrust bearing in the drivetrain according to an embodiment of the present disclosure;
FIG. 4 is a schematic view showing installation of a secondary thrust bearing in the drivetrain according to an embodiment of the present disclosure;
FIG. 5 is a schematic view illustrating installation of a radial bearing according to an embodiment of the present disclosure;
FIG. 6 is a perspective view of a gearbox according to an embodiment of the present disclosure;
FIG. 7 is a schematic view of a split bearing housing according to an embodiment of the present disclosure;
FIG. 8 is a schematic view of a monolithic bearing housing according to an embodiment of the present disclosure;
FIG. 9 is a schematic view showing installation of a rear radial bearing according to an embodiment of the present disclosure;
FIG. 10 is a schematic view showing another installation of a rear radial bearing according to an embodiment of the present disclosure; and

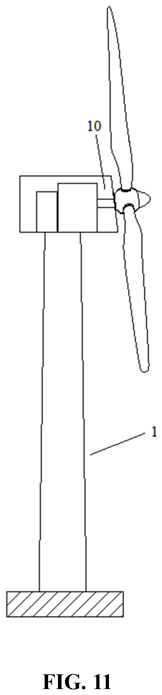

FIG. 11 is a perspective view of a wind turbine according to an embodiment of the present disclosure.

### DETAILED DESCRIPTION OF THE EMBODIMENTS

The following detailed description is provided to assist the reader in gaining a comprehensive understanding of the methods, apparatuses, and/or systems described herein. However, various changes, modifications, and equivalents of the methods, apparatuses, and/or systems described herein will be apparent after understanding the disclosure of the present disclosure. For example, the sequences of operations described herein are merely examples, and are not limited to those set forth herein, but may be changed as will become apparent after understanding the disclosure of the present disclosure, except for operations that must occur in a specific order. In addition, descriptions of features that are well known in the art may be omitted for increased clarity and conciseness.

The features described herein may be implemented in different forms and should not be construed as being limited to the examples described herein. Rather, the examples described herein are provided merely to illustrate some of the many possible ways of implementing the methods, apparatuses, and/or systems described herein, which many possible ways will be apparent after understanding the disclosure of the present disclosure.

As used herein, the term "and/or" includes any one, and any combination of any two or more, of the associated listed items.

Although terms such as "first," "second," and "third" may be used herein to describe various components, elements, regions, layers, or sections, these components, elements, regions, layers, or sections should not be limited by these terms. Rather, these terms are merely used to distinguish one component, element, region, layer, or section from another. Thus, a first component, first element, first region, first layer, or first section referred to in the examples described herein could also be termed a second component, second element, second region, second layer, or second section without departing from the teachings of the examples.

In the specification, when an element, such as a layer, region, or substrate, is described as being "on" another element, "connected to" or "coupled to" another element, it may be directly "on" the other element, directly "connected to" or "coupled to" the other element, or one or more intervening elements may be present therebetween. In contrast, when an element is described as being "directly on" another element, "directly connected to" or "directly coupled to" another element, there may be no intervening elements present therebetween.

The terminology used herein is for the purpose of describing various examples only and is not intended to limit the disclosure. Singular forms are intended to include plural forms as well, unless the context clearly indicates otherwise. The terms "comprises," "includes," and "has" specify the presence of stated features, quantities, operations, components, elements, and/or combinations thereof, but do not preclude the presence or addition of one or more other features, quantities, operations, components, elements, and/or combinations thereof. The term "plurality" means any number of two or more.

Unless otherwise specified, the definitions of directional terms in the present disclosure are based on the orientation in the drawings, unless otherwise stated, based on the orientation of the product under normal use conditions.

Unless defined otherwise, all terms used herein, including technical and scientific terms, have the same meaning as commonly understood by one of ordinary skill in the art to which this disclosure belongs after understanding the present disclosure. Terms such as those defined in commonly used dictionaries should be interpreted as having a meaning consistent with their meaning in the context of the relevant art and the present disclosure, and should not be interpreted in an idealized or overly formal sense unless expressly defined as such herein.

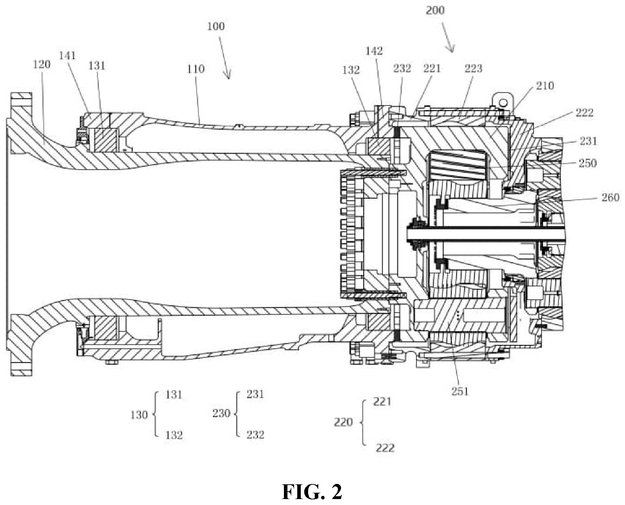

In order to solve the problems of the conventional drivetrain, including heavy weight, high cost, and complex structure, a drivetrain for a wind turbine is provided in embodiments of the present disclosure. Hereinafter, the embodiments of the present application will be described in detail with reference to FIGS. 2 to 4.

As shown in FIG. 2, the drivetrain 10 includes a shaft system 100 and a gearbox 200 connected to each other. The shaft system 100 includes a bearing housing 110 and a main shaft 120 rotatably disposed in the bearing housing 110. The gearbox 200 includes a housing 220 and a planet carrier 210 disposed in the housing 220. The housing 220 is fixedly connected to the axial rear end of the bearing housing 110 to form a stationary supporting structure, and the planet carrier 210 is rigidly connected to the rear end of the main shaft 120 to form a rotating structure for transmitting power. The drivetrain according to the embodiments of the present disclosure further includes a bearing assembly. The bearing assembly is installed between the supporting structure and the rotating structure, and configured to support the rotating structure, to reduce the friction resistance during motion, to make rotation smoother and more stable, to reduce energy loss and transmission noise, to minimize component wear, to prolong the service life of components, and to ensure stable operation of the equipment.

According to the direction of torque transmission, the main shaft 120 has a front end and a rear end opposite to each other in the axial direction. More specifically, the end of the main shaft 120 that receives torque input is defined as the front end, and the end that outputs torque is defined as the rear end.

When applied to a wind turbine, the front end of the main shaft 120 is connected to a hub of the wind turbine 1, and receives torque from the hub, which is then transmitted to a generator through the gearbox 200. The bearing assembly needs to withstand radial forces resulting from the weight of the rotor and the hub, as well as the force transmitted from the wind to the main shaft via the rotor. Therefore, in the drivetrain according to the embodiments of the present disclosure, the bearing assembly includes a radial bearing 130 and a thrust bearing 230. The radial bearing 130 is arranged between the supporting structure and the rotating structure to bear a load perpendicular to the axial direction of the main shaft 120, i.e., a load in the radial direction of the main shaft 120. The thrust bearing 230 is also arranged between the supporting structure and the rotating structure to bear a load in the axial direction.

As shown in FIG. 2, the gearbox 200 is used to convert the low rotational speed and high torque coming from the hub into a high rotational speed and low torque, which is in turn transmitted to the generator. The gearbox 200 generally includes a housing 220, an input shaft, a speed-increasing gear set, and an output shaft. The input shaft is connected to the main shaft 120 of the shaft system 100, and the output shaft is connected to the rotor of the generator. According to an embodiment of the present application, the gearbox 200 includes at least one stage of planetary gear train. However, the number of speed-increasing stages of the gearbox is not limited herein. For example, the gearbox 200 may include two or three stages of planetary gear trains, in which case, due to rigid connection to the main shaft 120, the planet carrier 210 constitutes the first-stage planet carrier in the gearbox 200 and has one end serving as the input shaft of the gearbox for receiving torque input.

An outer ring gear 223 is arranged on the housing 220 of the gearbox. The planet carrier 210 is arranged in the housing 220, and planet gears 250 are mounted on the planet carrier 210 to mesh with the outer ring gear 223. An axial end of the planet carrier 210 forms the input shaft of the gearbox 200 and is fixedly connected to the main shaft 120. When the main shaft 120 rotates, it drives the plurality of planet gears 250 to rotate. The plurality of planet gears 250 are meshed with a sun gear 260 radially inside the planet gears 250, and after being increased in speed through the sun gear 260, the rotation is transmitted to the next speed-increasing gear set or to the generator. The structure of the speed-increasing gear set of the gearbox 200 is not limited in the present application, and therefore will not be described in detail here. Hereinafter, the structure of the bearing assembly according to the embodiments of the present application will be described in detail.

According to an embodiment of the present disclosure, the thrust bearing 230 is arranged in the gearbox 200, for example, between the axial end of the planet carrier 210 and the supporting structure of the drivetrain, so that an axial load is borne by the planet carrier 210. The thrust bearing 230 includes a primary thrust bearing 231 and a secondary thrust bearing 232. According to an embodiment of the present application, at least one of the primary thrust bearing 231 and the secondary thrust bearing 232 is installed between the planet carrier 210 and the supporting structure. For example, the primary thrust bearing 231 is installed at the axial rear end of the planet carrier 210, and the secondary thrust bearing 232 is installed at the axial front end of the planet carrier 210.

As shown in FIG. 1, in the prior art, the thrust bearing is usually installed in the shaft system. However, in this case, the bearing housing 20 needs to be an integral bearing housing, which is inconvenient for the maintenance of the radial bearings. If the bearing housing 20 were to be designed as a split structure to facilitate the installation and maintenance of the radial bearings, an outwardly protruding thrust disc would have to be provided on the outer circumference of the main shaft 10, and a primary thrust bearing and a secondary thrust bearing would have to be installed on both axial sides of the thrust disc. In addition, a clamping structure for clamping the thrust bearings, a corresponding supporting structure, an external sealing structure, etc., are also required. Such an arrangement will lead to a more complex structure of the shaft system and an increase in the number of additional components, thereby causing various problems such as an increase in the weight and cost of the drivetrain.

However, according to the embodiments of the present disclosure, the thrust bearing 230 is installed in the gearbox 200, and the existing planet carrier structure in the drivetrain is utilized to install the thrust bearing or forms a friction pair with the thrust bearing. Thus, even if the bearing housing 110 is designed as a split structure, there is no need to additionally provide a thrust disc, a corresponding clamping structure, a supporting structure, etc. on the main shaft 120, reducing the number of components of the drivetrain to provide the compact overall structure that is highly integrated with the gearbox, and offering advantages of light weight and low cost.

Hereinafter, the embodiments of the present disclosure will be described in detail with reference to FIGS. 2 to 4.

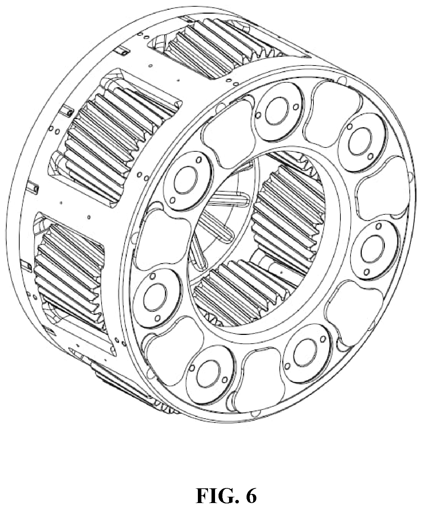

As shown in FIG. 2, the housing 220 includes a front housing 221 and a middle housing 222, which are respectively installed at the axial front and rear ends of the planet carrier 210. An outer ring gear 223 is connected between the front housing 221 and the middle housing 222, with internal teeth formed on the inner side of the outer ring gear 223. A plurality of planet gears 250 are arranged on the planet carrier 210, and the outer circumference of the planet gears 250 protrudes radially outward relative to the planet carrier 210 to mesh with the outer ring gear 223. The front housing 221 is located at the front end of the planet carrier 210, and the middle housing 222 is located at the axial rear end of the planet carrier 210. As shown in FIGS. 2 and 6, the planet carrier 210 is formed as an annular cylinder, and a plurality of planet gear mounting grooves are arranged at intervals on the annular cylinder in the circumferential direction. The plurality of planet gears 250 are respectively arranged in the plurality of planet gear mounting grooves via planet gear shafts 251. It can be seen that the axial length of the planet carrier 210 is greater than the axial length of the planet gears 250, so as to protrude beyond the two axial ends of the planet gears 250. Thus, flat surface structures can be formed at the two axial ends of the planet carrier 210 to serve as thrust pad mounting surfaces or friction surfaces.

The primary thrust bearing 231 is arranged between the axial rear end of the planet carrier 210 and the middle housing 222. The primary thrust bearing 231 may be fixedly mounted on the planet carrier 210 and rotate with the planet carrier 210, thereby forming a rotational friction pair with the middle housing 222. Alternatively, the primary thrust bearing 231 may be fixedly mounted on an axially inner side surface of the middle housing 222 facing the planet carrier 210, and the axial rear end face of the planet carrier 210 serves as a friction surface, so that a rotational friction pair is formed between the primary thrust bearing 231 and the planet carrier 210.

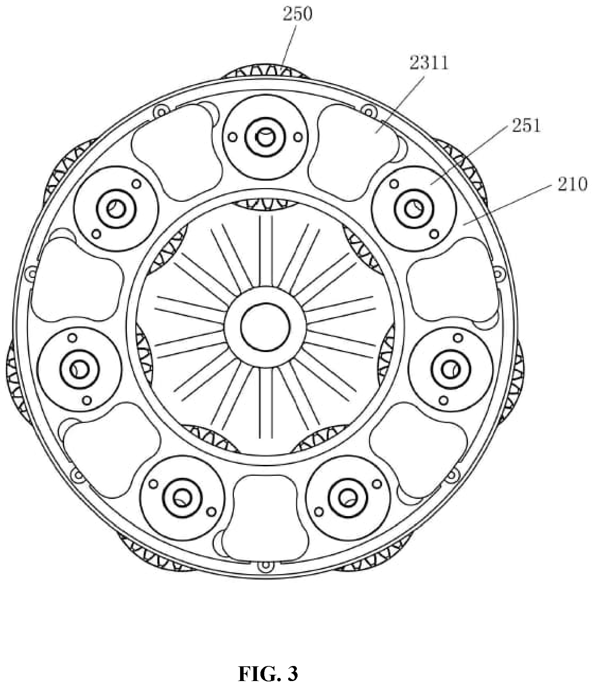

FIG. 3 illustrates an example in which the primary thrust bearing 231 is fixedly mounted on the planet carrier 210. As shown in FIGS. 2 and 3, a plurality of planet gears 250 are rotatably mounted on the planet carrier 210 via a plurality of planet gear shafts 251, respectively, and are arranged at intervals in the circumferential direction of the planet carrier 210. The primary thrust bearing 231 includes a plurality of main thrust pads 2311 arranged at intervals in the circumferential direction of the planet carrier 210, each main thrust pad 2311 being arranged between two adjacent planet gears 250. While making full use of the axial end face of the planet carrier 210, the vacant area between the planet gears 250 is utilized to avoid interference with the planet gear shafts 251.

According to an embodiment of the present application, the secondary thrust bearing 232 may also be installed in the gearbox 200, for example, at the axial front end of the planet carrier 210.

As shown in FIG. 2, the front end of the planet carrier 210 has a relatively flat surface. The secondary thrust bearing 232 may be installed between the axial front end of the planet carrier 210 and the axial rear end of the bearing housing 110 of the shaft system 100. The secondary thrust bearing 232 may be fixedly mounted on the bearing housing 110, thereby forming a friction pair with the axial front end face of the planet carrier 210. Alternatively, the secondary thrust bearing 232 may be mounted on the axial front end face of the planet carrier 210 and rotate with the planet carrier 210, thereby forming a friction pair with the axial rear end face of the bearing housing 110.

In the case where the secondary thrust bearing 232 is installed between the front end face of the planet carrier 210 and the rear end face of the bearing housing 110, the front housing 221 is formed in a cylindrical shape and is located radially outerside the secondary thrust bearing 232. The front housing 221 and the bearing housing 110 may be separately formed and then fixedly connected by fasteners, or may be formed into one piece.

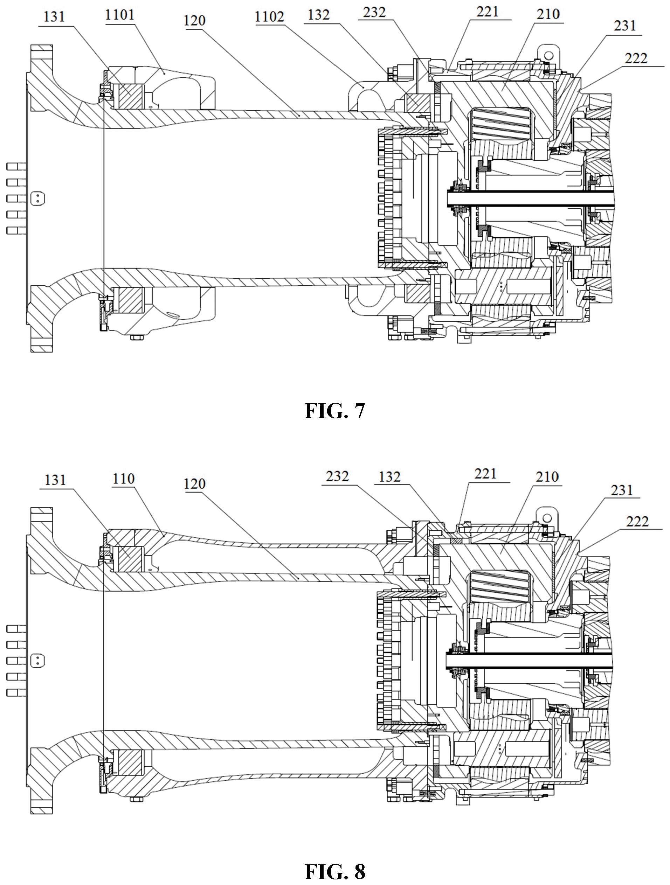

Alternatively, as shown in FIGS. 8 to 10, the secondary thrust bearing 232 may be installed between the front housing 221 and the axial front end face of the planet carrier 210. For example, a supporting flange may be extended radially inwardly from the inner side of the front housing 221, and the secondary thrust bearing 232 is installed between the supporting flange and the planet carrier 210. As an example, the secondary thrust bearing 232 may be installed on the axial front end face of the planet carrier 210 and form a friction pair with the supporting flange on the inner side of the front housing 221, or vice versa.

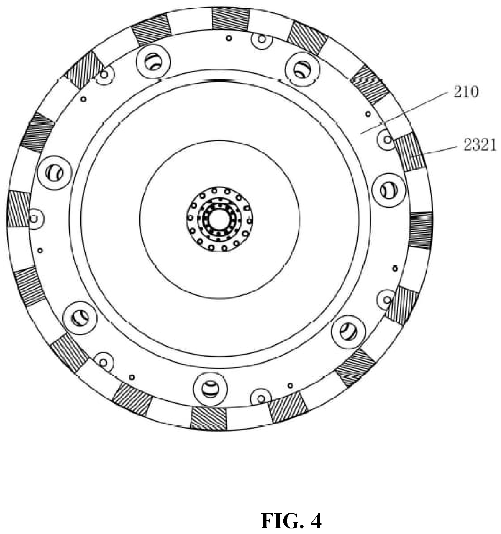

FIG. 4 illustrates an example in which the secondary thrust bearing 232 is mounted on the planet carrier 210. As shown in FIG. 4, the secondary thrust bearing 232 includes a plurality of secondary thrust pads 2321 arranged at intervals on the axial front end surface of the planet carrier 210 in the circumferential direction of the planet carrier 210.

According to an embodiment of the present application, by utilizing the axial end faces of the planet carrier 210 to install the thrust bearing 230, the thrust bearing 230 is highly integrated in the gearbox 200, so that there is no need to additionally provide a thrust disc and corresponding thrust pad support or clamping structure on the main shaft 120. By utilizing the existing planet carrier 210, the modification to the structure of the existing drivetrain is minimal, and thus the existing mold structure can be fully utilized, simplifying the manufacturing process, and reducing the manufacturing cost.

According to an embodiment of the present application, the bearing assembly further includes a radial bearing 130. The radial bearing 130 is arranged between the radially outer side of the rotating structure and the radially inner side of the supporting structure, so as to bear a radial load.

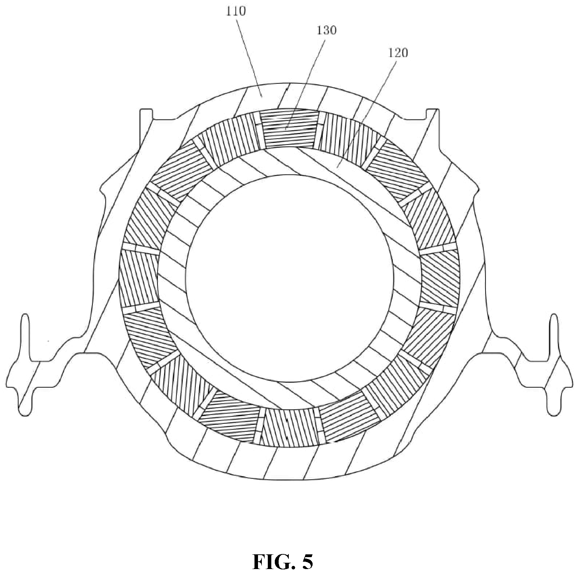

FIG. 5 is a schematic view showing installation of the radial bearing 130. The radial bearing 130 includes a plurality of radial bearing pads located between the main shaft 120 and the bearing housing 110 and arranged at intervals in the circumferential direction of the main shaft 120. The radial bearing 130 may be fixed on the main shaft 120 and rotate together with the main shaft 120, so that an inner surface of the bearing housing 110 serves as a friction surface. Alternatively, the radial bearing 130 may be fixedly mounted on the bearing housing 110, thereby forming a friction pair with an outer circumferential surface of the main shaft 120.

As shown in FIG. 2, the radial bearing 130 includes a front radial bearing 131 and a rear radial bearing 132, which are spaced apart in the axial direction of the main shaft 120, providing rotational support at the front and rear ends of the main shaft 120, respectively.

The bearing housing 110 may be of an integral structure, with the front radial bearing 131 and the rear radial bearing 132 respectively located on the radially inner sides of the front and rear ends of the bearing housing 110. In order to facilitate the maintenance of the radial bearings, radial bearing maintenance openings may be formed in the bearing housing 110. For example, when one of the radial bearing pads, which are fixedly mounted on the main shaft 120, needs to be repaired or replaced, the main shaft 120 may be rotated until the pad to be replaced is aligned with the maintenance opening. As shown in FIG. 2, a front radial bearing maintenance opening is formed at the front end of the bearing housing 110, and a rear radial bearing maintenance opening is formed at the rear end of the bearing housing 110. A front maintenance cover plate 141 and a rear maintenance cover plate 142 may be provided on the maintenance openings to cover the front radial bearing maintenance opening and the rear radial bearing maintenance opening, respectively.

According to an embodiment of the present disclosure, as shown in FIGS. 8 to 10, the rear radial bearing 132 may be arranged in the gearbox 200. More specifically, the rear radial bearing 132 may be arranged between the radially outer side of the planet carrier 210 and the radially inner side of the housing 220, for example, arranged between the radially outer side of the planet carrier 210 and the radially inner side of one of the front housing 221 and the middle housing 222. Similarly, the rear radial bearing 132 may be fixed on the radially outer surface of the planet carrier 210 or fixed on the radially inner surface of the housing 220.

According to an embodiment of the present disclosure, the front housing 221 and the bearing housing 110 may be separately formed and connected to each other by fasteners, or may be integrally formed. For example, as shown in FIGS. 2, 8, and 10, the front housing 221 is integrally formed with the rear end of the bearing housing 110, thereby providing more stable rotational support for rotating components. By integrally designing the front housing 221 and the bearing housing 110, the two are combined into one. Since the coupling surfaces between the bearing housing 110 and the front housing 221 are eliminated, the manufacturing and surface treatment processes of the coupling surfaces are eliminated, and the connectors between the two are eliminated, which is beneficial to reducing the manufacturing cost.

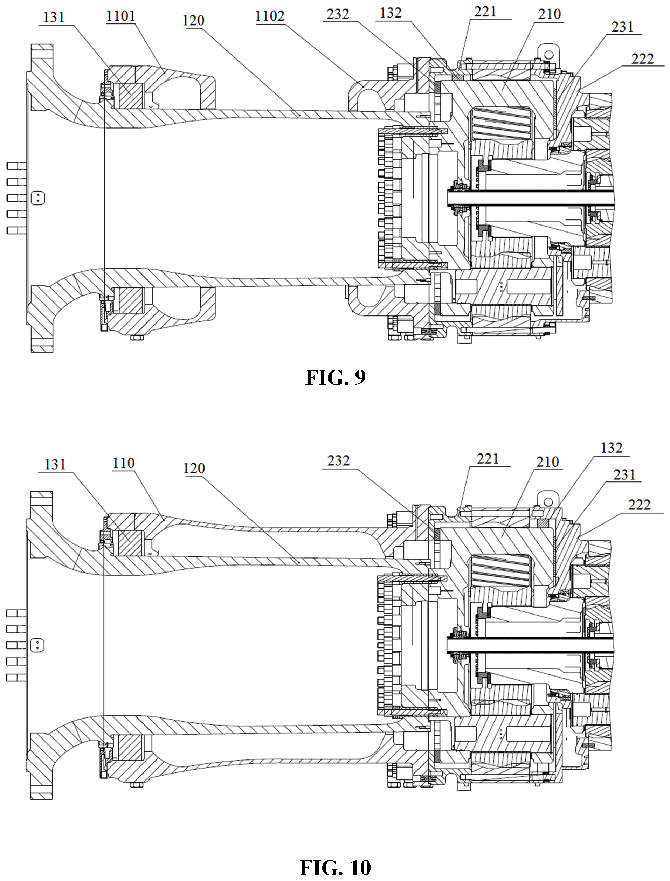

For example, as shown in FIGS. 7 and 9, the bearing housing 110 is formed as a split structure, including a front bearing housing 1101 for supporting the front radial bearing and a rear bearing housing 1102 for supporting the rear radial bearing. In this case, the rear bearing housing and the front housing 221 may be designed as one piece. The loads of the thrust bearing 230 and the rear radial bearing 132 all act on the rear bearing housing, whereas the front bearing housing 1101 bears only a radial force without any thrust force. This provides more stable support for the hub and the rotor, and is beneficial to fully utilize the advantages of structural integration to reduce the overall design cost.

According to an embodiment of the present disclosure, the main shaft 120 and the planet carrier 210 may be separately formed and connected to each other by fasteners, or may be integrally designed into one piece. By forming the main shaft 120 and the planet carrier 210 as an integral structure without coupling surfaces between the main shaft 120 and the planet carrier 210, the manufacturing and surface treatment processes of the coupling surfaces are eliminated, and the connectors between the two are eliminated, which is beneficial to reducing the manufacturing cost.

According to an embodiment of the present disclosure, the bearing housing 110 can be designed as a split structure, which is beneficial to providing more maintenance space. For example, the space between the front bearing housing 1101 and the rear bearing housing 1102 can be used to remove the bearing pad to be replaced from the front radial bearing 131 or the rear radial bearing 132 along the axial direction of the main shaft 120 and to replace it with a new one. In addition, by designing the bearing housing 110 in a split manner, the material used for the bearing housing 110 can be reduced, and the manufacturing cost and design weight of the bearing housing can be reduced.

According to an embodiment of the present disclosure, each of the radial bearing and the thrust bearing may be embodied as tapered bearing pads, spherical bearing pads, combination of tapered bearing pads with different angles, or in other forms.

According to an embodiment of the present disclosure, the planet carrier 210, the front housing 221, and the middle housing 222 all facilitate the provision of smooth, continuous supporting planes, which can be used for mounting bearings or serving as sliding friction surfaces. The embodiments of the present disclosure make full use of the structural characteristics of these components to set the installation structures of the radial bearings and the thrust bearings, which is beneficial to simplifying the structure of the drivetrain, reducing costs, and improving reliability.

By arranging the thrust bearing in the gearbox, it is beneficial to realize the design of a split bearing housing for the wind turbine main shaft system including a sliding bearing. Since the two axial end faces of the planet carrier are fully utilized, there is no need to provide a thrust disc and corresponding other structures in the shaft system 100, so this solution has obvious advantages in terms of overall design weight and manufacturing cost, and can reduce the weight and cost of the shaft system. By designing the bearing housing in a split manner, convenient maintenance can be achieved.

Although embodiments of the present disclosure have been described in detail above, those skilled in the art can make various modifications and variations to the embodiments of the present disclosure without departing from the spirit and scope of the present disclosure. It should be understood that, from the perspective of those skilled in the art, these modifications and variations will still fall within the spirit and scope of the embodiments of the present disclosure as defined by the claims.

## Claims

1. A drivetrain (10), **characterized by** comprising:
a bearing housing (110);
a main shaft (120), rotatably disposed and supported in the bearing housing (110) and having a front end and a rear end opposite to each other in an axial direction;
a gearbox (200), comprising a housing (220) and a planet carrier (210) arranged in the housing (220), wherein the housing (220) is fixedly connected to an axial rear end of the bearing housing (110), and the planet carrier (210) is rigidly connected to the rear end of the main shaft (120); and
a thrust bearing (230), arranged in the gearbox (200).

2. The drivetrain according to claim 1, **characterized in that** the gearbox (200) comprises at least one stage of planetary gear train, the planet carrier (210) is a first-stage planet carrier arranged in the gearbox (200), and the thrust bearing (230) is a sliding bearing arranged between an axial end of the planet carrier (210) and the housing (220).

3. The drivetrain according to claim 2, **characterized in that** the thrust bearing (230) is mounted on the housing (220) and forms a friction pair with an axial end face of the planet carrier (210), or
the thrust bearing (230) is mounted on the axial end face of the planet carrier (210) and forms a friction pair with the housing (220).

4. The drivetrain according to claim 3, **characterized in that** the housing (220) comprises a front housing (221), a middle housing (222), and a ring gear (223) connected between the front housing (221) and the middle housing (222),
the thrust bearing (230) comprises a primary thrust bearing (231) and a secondary thrust bearing (232),
the primary thrust bearing (231) is arranged between an axial rear end of the planet carrier (210) and the middle housing (222), and
the secondary thrust bearing (232) is arranged between an axial front end of the planet carrier (210) and the axial rear end of the bearing housing (110); or the secondary thrust bearing (232) is arranged between the axial front end of the planet carrier (210) and a radially inward supporting flange of the front housing (221).

5. The drivetrain according to claim 4, **characterized in that** the drivetrain further comprises a plurality of planet gears (250) mounted on the planet carrier (210), the plurality of planet gears (250) are arranged at intervals in a circumferential direction of the planet carrier (210), and the primary thrust bearing (231) is mounted on an axial rear end face of the planet carrier (210) between two adjacent planet gears (250).

6. The drivetrain according to claim 5, **characterized in that** the planet carrier (210) is configured as an annular cylinder having an axial length greater than that of the planet gears (250), and
a plurality of planet gear mounting grooves are formed in the annular cylinder, the plurality of planet gears (250) are respectively mounted in the plurality of planet gear mounting grooves, and an annular flat surface is formed at each of both axial ends of the annular cylinder.

7. The drivetrain according to claim 4, **characterized in that** the bearing housing (110) comprises a front bearing housing (1101) and a rear bearing housing (1102) which are separately formed; and
the drivetrain further comprises a front radial bearing and a rear radial bearing, wherein the front radial bearing is arranged between the front bearing housing (1101) and the main shaft (120), and the rear radial bearing is arranged between the rear bearing housing (1102) and the main shaft (120).

8. The drivetrain according to claim 7, **characterized in that** the secondary thrust bearing (232) is arranged between a rear end face of the rear bearing housing (1102) and a front end face of the planet carrier (210).

9. The drivetrain according to claim 7 or 8, **characterized in that** the bearing housing (110) and the front housing (221) are integrally formed; or the bearing housing (110) and the front housing (221) are separately formed and connected to each other by fasteners.

10. The drivetrain according to claim 1, **characterized in that** the drivetrain further comprises a front radial bearing (131) and a rear radial bearing (132),
the front radial bearing (131) is arranged between the bearing housing (110) and an outer circumference of the front end of the main shaft (120), and
the rear radial bearing (132) is mounted on a radially outer surface of the planet carrier (210) and forms a friction pair with a radially inner surface of the housing (220); or the rear radial bearing (132) is mounted on the radially inner surface of the housing (220) and forms a friction pair with the radially outer surface of the planet carrier (210).

11. The drivetrain according to claim 1, **characterized in that** the main shaft (120) and the planet carrier (210) are of an integral structure; or the main shaft (120) and the planet carrier (210) are separately formed and connected to each other by fasteners.

12. The drivetrain according to claim 1, **characterized in that** the drivetrain further comprises a radial bearing (130), wherein the radial bearing (130) is mounted on the main shaft (120) and forms a friction pair with the bearing housing (110); or the radial bearing (130) is mounted on the bearing housing (110) and forms a friction pair with the main shaft (120).

13. The drivetrain according to claim 1, **characterized in that** each of the radial bearing (130) and the thrust bearing (230) comprises one of a tapered bearing pad and a spherical bearing pad.

14. The drivetrain according to any one of claims 1 to 13, **characterized in that** the drivetrain is configured to be installed between a rotor and a generator of a wind turbine.

15. A wind turbine, **characterized by** comprising the drivetrain according to any one of claims 1 to 14.
